# EUROPEAN PATENT SPECIFICATION

(11) **EP 1 182 379 B1**
(45) Date of publication and mention of the grant of the patent: **28.09.2005**
(21) Application number: 01116578.4
(22) Date of filing: 09.07.2001
(51) Int. Cl.: F16H 55/24, F16H 57/12

(54) **Dividing head using multiple lead type worm**
Teilkopf, der eine Schnecke mit Mehrfachsteigung verwendet
Tête divisée employant un engrenage à vis sans fin multiples

(30) Priority: 24.08.2000 JP 2000254180
(43) Date of publication of application: 27.02.2002
(73) Proprietor: TSUDAKOMA KOGYO KABUSHIKI KAISHA, Ishikawa-Ken (JP)
(72) Inventor: Matsukawa, Yukihiro, Ishikawa-ken (JP)
(74) Representative: Turi, Michael

(56) References cited:
- WO-A-00/36315
- DE-A- 3 107 746
- DE-A- 4 138 259
- DE-A- 4 223 100
- DE-C- 743 530
- DE-U- 7 718 439
- US-A- 4 093 052
- US-A- 4 615 230

## Description

### BACKGROUND OF THE INVENTION

### 1. Field of the invention

The present invention relates to a dividing head, i.e., index head using a multiple lead type worm, and more particularly, to a dividing head adapted to adjust a backlash between a worm and a worm wheel by moving the worm in its axial direction.

### 2. Prior Art

In a dividing head using a multiple lead type worm, it is known to adjust a backlash between the worm and a worm wheel by moving the worm in its axial direction relative to the worm wheel which meshes with the worm as shown for example in Japanese Utility Model Appln. Publication No. 2-14921 which shows all the features of the preamble of independent claim 1.

In the foregoing prior art, a worm has a worm teeth portion and a drive shaft portion which are integrally formed, and a worm wheel is coupled with a worm wheel shaft (an output shaft). The axial position of the worm relative to the worm wheel is adjusted by moving a bearing which supports the drive shaft portion in the axial direction of the drive shaft portion.

A backlash is adjusted by loosening a plurality of assembling screws to make a bearing housing movable relative to a frame and adjusting the amount of screwing of adjusting screws into the bearing housing, thereby moving the worm relative to the axial direction together with the bearing housing. The bearing housing is reassembled into the frame by means of assembling screws after the adjustment of the backlash.

In the above-mentioned prior art, however, there being a great number of adjusting screws, it is necessary to equalize the amounts of projections of all the adjusting screws, which is troublesome. Furthermore, if the assembling screws are tightened, the bearing housing moves, causing a change in the amount of a backlash, and it necessitates to adjust the amount of the projections of the adjusting screws beforehand in anticipation of a change in the amount of the backlash, which requires experience. There is also a method of inserting a shim between the bearing housing and the frame, but the bearing housing should be removed from a worm and a frame, making an adjusting operation more troublesome.

Further, in a multishaft dividing head provided with a plurality of worm wheel shafts, the drive shaft portions of adjoining worms are coupled by coupling so as to rotate all the worms simultaneously; however, if a backlash between a worm and a worm wheel of one set is adjusted, a backlash between a worm and a worm wheel of another set is influenced, sometimes requiring adjusting such a backlash, too.

US patent no. 4,615,230 discloses a gear transmission comprising a driving shaft using two oppositely threaded worms with which respectively mesh on opposite sides two worm wheels of a first kinematic channel and two worm wheels of a second kinematic channel, wherein the worms of equal and opposite pitch are formed on the shaft driven by an electric motor.

### SUMMARY OF THE INVENTION

It is, therefore, an object of the present invention to facilitate an adjusting operation of a backlash between a worm and a worm wheel in a dividing head using a multiple lead type worm. This is achieved by a dividing head according to claim 1.

The dividing head comprises a hollow worm body having multiple lead type worm teeth, a drive shaft fitted into a hollow portion of the worm body, and an assembler having an annular portion which is coaxial with the drive shaft, displaces in the radial direction to press the worm body and the drive shaft, and couples them by frictional engagement.

Since the worm body is fitted on the drive shaft, the worm body can rotate relative to the drive shaft, can move to an arbitrary position in the axial direction, and can be unmovably assembled by the assembler.

Adjustment of a backlash between the worm wheel and the worm can be carried out, in a state that the worm wheel shaft and the drive shaft are assembled into the frame through a bearing and that the worm body and the drive shaft are uncoupled, by moving the worm body relative to the drive shaft. The worm body and the drive shaft are coupled by the assembler after adjusting the backlash so as not to move relatively.

When adjusting the backlash, the drive shaft and the bearing housing are not moved. Also, since the bearing housing is not assembled into the frame after adjusting the backlash, there is no backlash error due to an axial movement caused by the assembling of the bearing housing after adjusting the backlash, and there is no need to readjust the backlash.

As a result, according to the present invention, the operability in adjusting a backlash is improved, and the backlash can be adjusted with high accuracy.

The assembler can include: a cylinder which forms the annular portion, the cylinder being disposed between the worm body and the drive shaft, having a fluid reservoir in its interior, and being expandable with the outer periphery and the inner periphery of the cylinder displaced outwardly and inwardly in the radial direction by the pressure of the reservoired fluid; a flange integrally following the cylinder and having a screw hole connected to the reservoir; and a screw member to be screwed into the screw hole, wherein the worm body can have a fitting hole having a larger diameter than that of the drive shaft at an axial position corresponding to the worm teeth.

By constituting the assembler as mentioned above, the outer periphery and the inner periphery of the cylinder can be displaced in the radially opposite directions to each other by moving the screw member forward and backward relative to the screw hole and changing the pressure of the reservoired fluid, thereby actuating and releasing the frictional engagement of the cylinder and the drive shaft due to the pressure of the outer periphery of the cylinder against the fitting hole, actuating and releasing the frictional engagement of the worm body and the drive shaft through the cylinder, and selectively coupling or uncoupling the worm body and the drive shaft. Further, since the cylinder is inserted into the fitting hole formed in a position in the axial direction corresponding to the worm teeth, a space in the axial direction is saved.

If the dividing head is a multishaft dividing head provided with a plurality sets of the worm bodies and the assembler, at least two sets of the worm bodies can be assembled on the drive shaft in common. By doing so, when adjusting the backlash of one set, the drive shaft is left unmovable in the axial direction and does not influence the backlash of the other sets. Further, such a dividing head is higher in rigidity and straightness than a conventional multishaft dividing head connecting a plurality of worms by coupling, improved in accuracy in torsion, deflection, and the like, and the space between the worm wheels can be made small by the axial dimension of the coupling, thereby saving the space. Further, the worm body can be moved relative to the drive shaft to an arbitrary position in the circumferential direction for coupling, so that the phases of at least two sets of circular tables can be easily conformed.

### BREEF OF THE DRAWINGS

Fig. 1 is a cross sectional view showing one embodiment of the dividing head according to the present invention.
Fig. 2 is a cross sectional view showing in detail a part of the dividing head shown in Fig. 1.
Fig. 3 is an enlarged cross sectional view showing the major part of the dividing head in Fig. 1.
Fig. 4 is a cross sectional view taken along the line 4-4 in Fig. 3.
Fig. 5 is a cross sectional view showing a part of another embodiment of the dividing head according to the present invention.
Fig. 6 is an enlarged cross sectional view of the major part of the dividing head shown in Fig. 5.

### PREFEED EMBODIMENT OF THE INVENTION

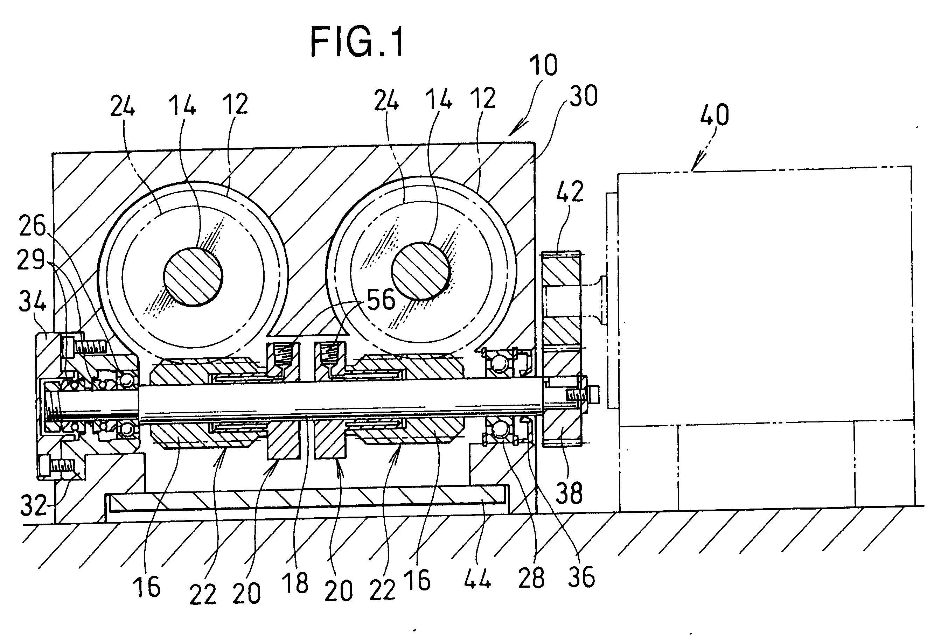

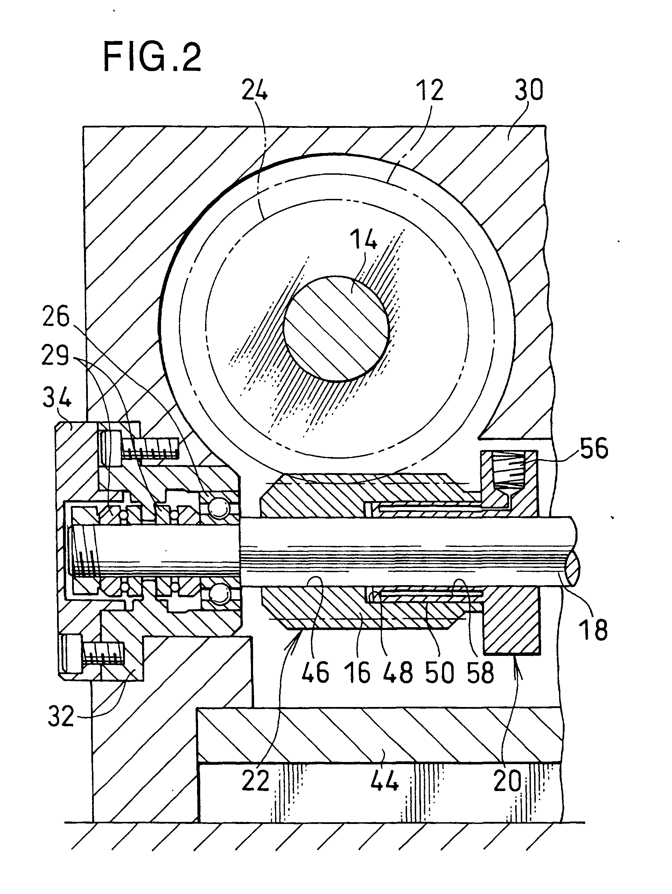

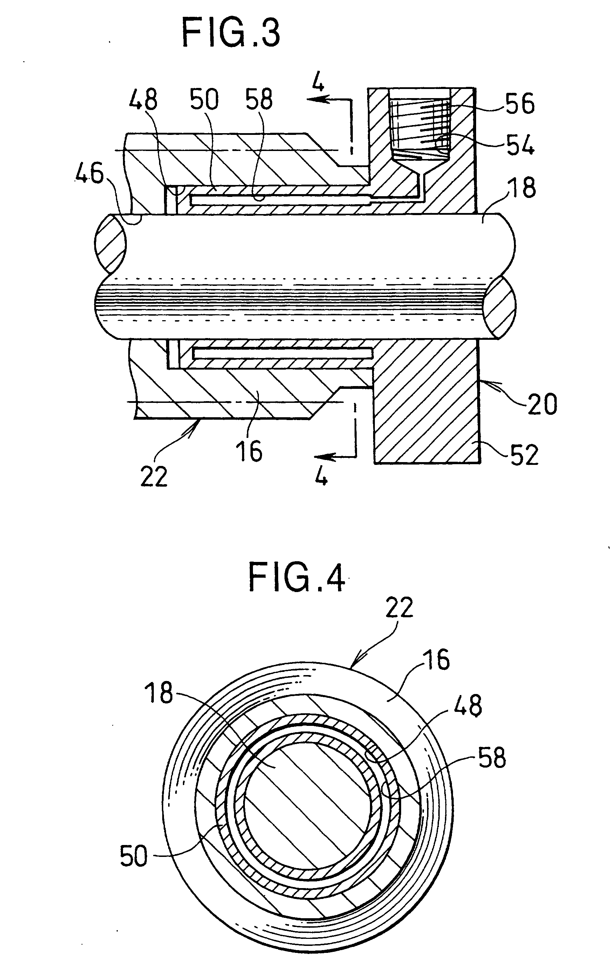

Referring to Figs. 1 through 4, a dividing head 10 is a multishaft dividing head provided with two worm wheel shafts 14, i.e., output shafts 14 having worm wheels 12 assembled. The dividing head 10 comprises two sets of worms 22 in which two hollow worm bodies 16 releasably coupled with a common drive shaft 18 by an assembler 20. To each worm wheel shaft 14, a circular table 24 is attached.

The drive shaft 18 is rotatably received at its both ends on a frame 30 by radial bearings 26, 28 and two thrust bearings 29. The radial bearing 26 and the two thrust bearings 29 which receive one end portion of the drive shaft 18.are removably assembled together with the drive shaft 18 on the frame 30 by a housing 32. An end plate 34 is assembled into the housing 32.

To the other end portion of the drive shaft 18, the radial bearing 28 and an oil seal 36 are attached. The shaft end of the other end portion of the drive shaft 18 is projected out of the frame 30. A gear 38 is assembled into the shaft end of the other end portion of the drive shaft 18. The gear 38 meshes with a gear 42 assembled into the rotation shaft of a drive motor 40 and is rotated by the driving motor 40.

When the drive shaft 18 is rotated by the driving motor 40, the worm bodies 16 are rotated, whereby the worm wheels 12 and the worm wheels 14 are rotated. As a result, the circular table 24 is rotated, and an angular division is carried out.

The frame 30 is opened at downward and in the front surface. The downward opening is blocked by a bottom plate 44 which is removably assembled with the frame 30 by a plurality of screw members. The front surface is on this side in the perpendicular direction to the sheet surface in Fig. 1, and the front-side opening is blocked by a lid plate (not shown) removably assembled into the frame 30 by a plurality of screw members.

Each worm body 16 is shaped in a hollow form so as to coaxially have a hollow portion 46 which is a fitting hole to be fitted on the drive shaft 18, and a space portion 48 which is a fitting hole for receiving a part of the assembler 20, and further has a multiple lead type worm teeth on the outer peripheral portion. The inner diameter of the space portion 48 is larger than the diameter of the drive shaft 18. In the worm teeth, the leads are slightly different at the right and left sides of the teeth face, so that the thickness dimension of the teeth gradually increases toward one side (e.g., the side of the assembler 20) in the axial direction (rotation axis) of the worm body 16 and the drive shaft 18.

Each assembler 20 include a cylinder 50 forming an annular portion for combining the worm body 16 and the drive shaft 18 by frictional engagement, an integrally continuous outward flange 52, and a screw member 56 air-tightly or liquid-tightly screwed into a threaded hole 54 formed in the flange 52. The cylinder 50 has a hollow shape to function as a through hole, has a fluid reservoir 58 inside and can be selectively expanded and contracted by adjusting the pressure of fluid such as reservoired working oil. The screw hole 54 of the flange 52 extends in the radial direction of the flange 52 and is connected to the reservoir 58.

In each assembler 20, the coupling of the worm body 16 and the drive shaft 18 is carried out by screwing the screw member 56 into the threaded hole 54 with the cylinder 50 disposed coaxially in the space portion 48 of the worm body 16 to raise the pressure of the fluid inside the reservoir 58, thereby expanding the cylinder 50 and displacing the inner periphery and the outer periphery of the cylinder 50 radially outward and inward directions opposite to each other. By this, the cylinder 50 and the worm body 16 are frictionally engaged by the pressure of the outer periphery of the cylinder 50 against the inner periphery of the space portion 48, and the cylinder 50 and the drive shaft 18 are frictionally engaged by the pressure of the inner periphery of the cylinder 50 against the drive shaft 18, whereby the worm body 16 and the drive shaft 18 are coupled.

The worm body 16 and the drive shaft 18 is disengaged by loosening the screw member 56 to lower the pressure of the fluid within the reservoir 58 thereby contracting the cylinder 50. Since this lowers the frictional engagement force to both the outer periphery and the inner periphery of the cylinder 50 positioned between the worm body 16 and the drive shaft 18, the worm body 16 and the drive shaft 18 are disengaged.

When adjusting the backlash between the worm wheel 12 and the worm 22 (worm body 16), a lid plate blocking the front opening of the frame 30 is firstly removed. Then, the screw member 56 is loosened to lower the pressure of the fluid within the reservoir 58, thereby disengaging the worm body 16 and the drive shaft 18. Thereafter, the worm wheel 12 is kept irrotatable in that state, and the worm body 16 is rotated, following which the worm body 16 and the assembler 20 are moved in the axial direction of the drive shaft 18 relative to the worm wheel 12.

In this adjustment of the backlash, when the worm wheel 12 is meshed with worm teeth large in tooth thickness, the backlash becomes small, and when the worm wheel 12 is meshed with worm teeth small in tooth thickness, the backlash becomes large. Therefore, by moving the worm body 16 in its axial direction, the position of the worm body 16 in the axial direction can be adjusted such that the amount of backlash becomes optimum.

After the backlash adjustment, the screw member 56 is screwed into the screw hole 54 to raise the pressure of the fluid within the reservoir 58. By this, the worm body 16 and the drive shaft 18 are reunited. Further, the lid plate for blocking the front opening of the frame 30 is finally assembled into the frame 30.

The foregoing backlash adjustment is carried out for each set of the worm wheel 12 and the worm body 16, and the back lash adjustment of one set does not influence the backlash adjustment of the other set. Phasing of the circular tables 24 of both sets can be made after adjusting the backlash of one set.

As mentioned above, in a state that both the worm wheel shaft 14 and the drive shaft 18 are assembled into the frame 30 through the bearing and that the worm body 16 and the drive shaft 18 are disengaged, keeping the worm wheel 12 irrotatable, the backlash between the worm wheel 12 and the worm 22 can be adjusted by moving the worm body 16 in its axial direction while rotating the worm body 16 relative to the drive shaft 18.

Since the drive shaft 18 and the bearing housing 32 are not moved at the time of adjusting the backlash, and since there is no necessity for the assembling of the bearing housing 32 after the backlash adjustment, there is no error in backlash by the axial movement, and there is no need to readjust the backlash.

As a result of the above, the dividing head 10 improves the operability in adjusting the backlash, and the backlash can be adjusted with high accuracy.

Also, according to the dividing head 10, by moving forward and backward the screw member 56 relative to the screw hole 54 for changing the pressure of the reservoired fluid, the worm body and the drive shaft can be selectively coupled or uncoupled. Further, since the cylinder 50 is inserted into a space formed at an axial position corresponding to the worm body 16, it reduces the space in the axial direction.

According to the dividing head 10, furthermore, in comparison with the conventional multishaft dividing head connecting a plurality of worms by a coupling, the rigidity and the straightness are enhanced, the accuracy in torsion, deflection and the like are improved, and the distance between the worm wheels 12 can be made smaller by the axial dimension of the coupling to reduce the space. Also, since the worm body 16 can be coupled by moving it to an arbitrary position in the circumferential direction relative to the drive shaft 18, the phases of all the circular tables 24 can be easily coincided.

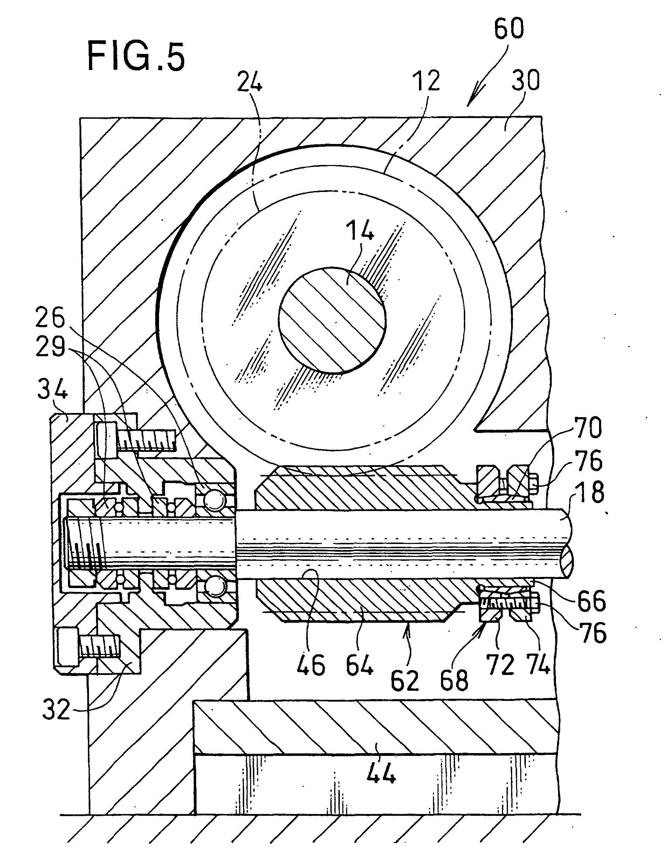

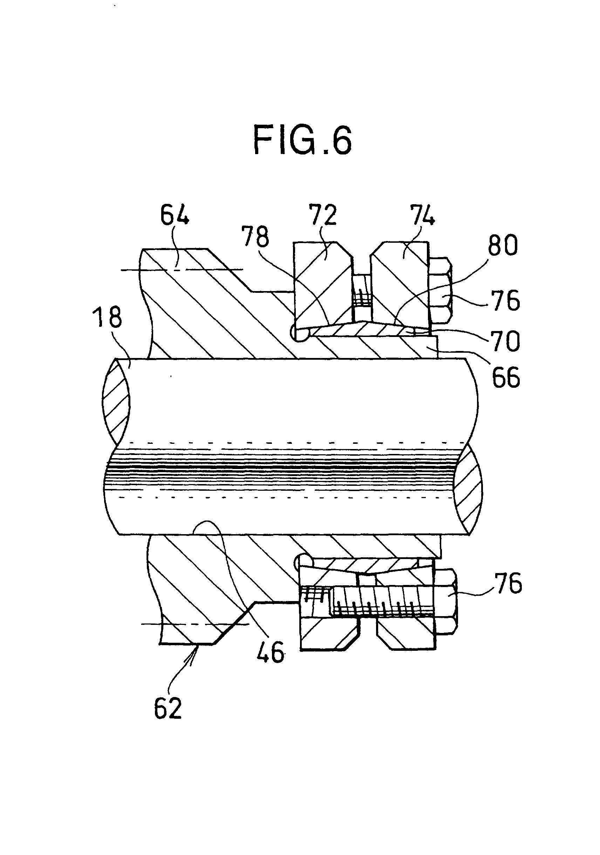

In the dividing head 60 shown in Figs. 5 and 6, a worm body 64 which is a member of a worm 62 is formed in the same shape as the worm body 16 except that the worm body 64 has an elastically deformable sleeve 66 at one end in place of the space portion 48 of the worm body 16 in the dividing head 10.

An assembler 68 for assembling the worm body 64 into the drive shaft 18 is provided with a first ring 70 to be fitted on the outside of the sleeve 66, a second ring 72 fitted on the worm teeth side of the outer periphery of the first ring 70, a third ring 74 fitted on the opposite side of the worm teeth of the outer periphery of the first ring 70, and a plurality of screw members 76 screwed into the second ring 72 through the third ring 74.

The first ring 70 has an outer periphery having a mountain-like shape in section due to two truncated conical faces 78, 80. Therefore, the diameter of the outer periphery of the first ring 70 is decreased toward both end sides in its axial direction.

The second ring 72 has a truncated conical inner periphery corresponding to one truncated conical face 78, with the inner periphery fitted on the truncated conical face 78. The third ring 74 has a truncated conical inner periphery corresponding to the other truncated conical face 80 of the third ring 70, with its inner periphery fitted on the other truncated conical face 80.

Each screw member 76 is illustrated as a bolt, which is screwed into the second ring 72, penetrating the third ring 74.

In the dividing head 60, coupling or uncoupling of the worm body 64 relative to the drive shaft 18 can be made by bringing the second ring 72 and the third ring 74 close to or away from each other by means of the screw member 76.

By increasing the amount of screwing the screw member 76 into the second ring 72, the second and third rings 72 and 74 relatively come closer, so that their inner peripheries are respectively brought into contact with larger diameter portions of the outer periphery of the first ring 70, and the inner peripheries of the second and third rings 72 and 74 press the first ring 70. This makes the first ring 70 displace inwardly in the radial direction and presses the sleeve 66. Consequently, the sleeve 66 is displaced inwardly in the radial direction and presses the drive shaft 18. As a result, the friction force by the pressing force is generated between the inner periphery of the sleeve 66 and the drive shaft 18 to couple the sleeve 66 and the drive shaft 18.

When the amount of screwing of the second ring 72 into the screw member 76 is decreased, the second and the third rings 72, 74 are relatively separated to release the pressure of the first ring 70 against the sleeve 66, making the frictional engagement force between the drive shaft 18 and the sleeve 66 smaller, so that the drive shaft 18 and the worm body 64 are uncoupled.

In the dividing head 60, therefore, the backlash between the worm wheel 12 and the worm body 64 can be adjusted by making the amount of screwing of the second ring 72 into the screw member 76 small, keeping the worm wheel 12 irrotatable in its state and moving the worm body 64 in its axial direction while rotating the worm body 64 about the drive shaft 18.

In the first ring 70, the first ring 70 may be formed from a non-continuous annular portion, by forming at least one void space in the circumferential direction. By this, the first cylinder 70 can be displaced radially with smaller force.

The present invention is not limited to the above embodiments. For example, the present invention can be applied not only to a double-shaft dividing head but also to a dividing head comprising a single worm wheel shaft only as well as to a multishaft dividing head comprising at least three worm wheel shafts. The present invention can be changed variously without departing from the scope of the appending claims.

## Claims

1. A dividing head (10, 60) for angular division of a circular table (24) comprising a worm wheel (12) assembled on a worm wheel shaft (14) to which a circular table is attached and a multiple lead type worm (22, 62) meshed with said worm wheel (12),
**characterized in that**
said worm (22, 62) is divided into:
a hollow worm body (16, 64) meshed with said worm wheel (12) and having teeth with different leads at opposite sides of the teeth face so that the teeth thickness gradually increases towards one direction of the rotation axis of said worm;
a drive shaft (18) fitted into a hollow portion (46) of said worm body (16, 64); and
a releasable assembler (20, 68) having an annular portion which is coaxial with said drive shaft and which displaces radially to press said worm body and said drive shaft to couple both by frictional engagement, to allow backlash adjustment between the worm (22, 62) and the worm wheel (12).

2. A dividing head as claimed in claim 1, wherein said assembler (20) includes a cylinder (50) which forms said annular portion, the cylinder being disposed between said worm body (16) and said drive shaft (18), having a fluid reservoir (58) in its interior, and being expandable with its outer periphery and its inner periphery being displaced outwardly and inwardly in the radial direction by the pressure of the reservoired fluid; a flange (52) integrally following one end of said cylinder and having a screw hole (54) connected to said reservoir; and a screw member (56) to be screwed into said screw hole; and
wherein said worm body (16) has a fitting hole (48) for receiving said cylinder (50), the fitting hole having a larger diameter than that of said drive shaft (18).

3. A dividing head as claimed in claim 1, **characterized in that** said worm body (64) has an elastically deformable sleeve (66) at one end, wherein said assembler (68) has a first ring (70) fitted on the outside of said sleeve, a second ring (72) fitted on the outer periphery of said first ring on the worm teeth side, a third ring (74) fitted on the outer periphery of said first ring on the opposite side to the worm teeth, and a plurality of screw members (76) screwed into said second ring, penetrating said third ring, and wherein said first, second and third ring displace said sleeve in its radial direction according to the amount of screwing of said screw member into said second ring.

4. A dividing head as claimed in claim 3, wherein said first ring (70) has an outer periphery having a section shaped like a mountain by two truncated conical faces (78, 80), wherein said second ring (72) has an inner periphery with a truncated conical shape corresponding to one (78) of said truncated conical faces, the inner periphery of the second ring being fitted to the one (78) of said truncated conical face, and wherein said third ring has an inner periphery with a truncated conical shape corresponding to the other (80) of said truncated conical faces of said first ring, the inner periphery of the third ring being fitted to the other (80) of said truncated conical faces.

5. A dividing head as claimed in claim 1, 2, 3 or 4, wherein said dividing head is a multishaft dividing head comprising plural sets of said worm bodies (16, 64) and said assemblers (20, 68), and wherein at least two sets of said worm bodies are assembled on said drive shaft (18) in common.

## Patentansprüche

1. Teilkopf (10, 60) zur Winkeleinteilung eines Drehtischs (24), aufweisend ein Schneckenrad (12), welches an eine Schneckenradwelle (14) montiert ist, an der ein Drehtisch angebracht ist, und eine Schnecke (22, 62) mit Mehrfachsteigung, welche mit dem Schneckenrad (12) im Eingriff steht,
**dadurch gekennzeichnet, daß**
die Schnecke (22, 62) aufgeteilt ist in:
einen hohlen Schneckenkörper (16, 64), welcher mit dem Schneckenrad (12) im Eingriff steht und Zähne mit unterschiedlichen Steigungen an gegenüberliegenden Seiten der Zahnflanken aufweist, so daß die Zahndicke graduell in eine Richtung der Rotationsachse der Schnecke zunimmt;
eine Antriebswelle (18), welche in einen hohlen Abschnitt (46) des Schneckenkörpers (16, 64) eingesetzt ist; und
einen lösbaren Verbinder (20, 68) mit einem koaxial zur Antriebswelle verlaufenden Ringabschnitt, der radial verstellt wird, um gegen den Schneckenkörper und die Antriebswelle zu drücken und diese über einen Reibschluß miteinander zu koppeln, um eine Einstellung des Spiels zwischen der Schnecke (22, 62) und dem Schneckenrad (12) zu ermöglichen.

2. Teilkopf nach Anspruch 1, bei welchem der Verbinder (20) einen Zylinder (50) umfaßt, welcher den Ringabschnitt bildet, der Zylinder zwischen dem Schneckenkörper (16) und der Antriebswelle (18) angeordnet ist und ein Fluidreservoir (58) in seinem Innern aufweist, und dessen äußere Umfangsfläche und innere Umfangsfläche dehnbar sind und durch den Druck des enthaltenen Fluids radial nach außen und innen verstellt werden; einen Flansch (52), welcher integral an ein Ende des Zylinders angeschlossen ist und eine Gewindebohrung (54) aufweist, die mit dem Reservoir verbunden ist; und ein Schraubelement (56) zum Einschrauben in die Gewindebohrung; und
bei welchem der Schneckenkörper eine Aufnahmeöffnung (48) zur Aufnahme des Zylinders (50) aufweist, wobei die Aufnahmeöffnung einen größeren Durchmesser als die Antriebswelle (18) aufweist.

3. Teilkopf nach Anspruch 1, **dadurch gekennzeichnet, daß** der Schneckenkörper (64) an einem Ende eine elastisch verformbare Manschette (66) aufweist, wobei der Verbinder (68) einen auf die Außenseite der Manschette aufgesetzten ersten Ring (70) aufweist, einen zweiten Ring (72), welcher zur Zahnseite der Schnecke hin auf den Außenumfang des ersten Rings aufgesetzt ist, einen dritten Ring (74), welcher gegenüber der Zahnseite der Schnecke auf den Außenumfang des ersten Rings aufgesetzt ist, und mehrere Schraubelemente (76), welche den dritten Ring durchdringend in den zweiten Ring eingeschraubt sind, und wobei der erste, zweite und dritte Ring die Manschette entsprechend der Schraubtiefe der Schraubelemente in den zweiten Ring radial verstellen.

4. Teilkopf nach Anspruch 3, bei welchem der erste Ring (70) einen Außenumfang aufweist, welcher einen bergförmigen Querschnitt aufweist, der durch zwei Kegelstumpfflächen (78, 80) gebildet wird, wobei der zweite Ring (72) einen kegelstumpfförmigen Innenumfang aufweist, der einer (78) der Kegelstumpfflächen entspricht, der Innenumfang des zweiten Ringes auf die eine Kegelstumpffläche (78) aufgesetzt ist, und wobei der dritte Ring einen kegelstumpfförmigen Innenumfang aufweist, der der anderen Kegelstumpffläche (80) des ersten Rings entspricht, und der Innenumfang des dritten Rings auf die andere Kegelstumpffläche (80) aufgesetzt ist.

5. Teilkopf nach Anspruch 1, 2, 3 oder 4, bei welchem der Teilkopf ein Mehrschaftteilkopf ist, der mehrere Sätze Schneckenkörper (16, 64) und Verbinder (20, 68) aufweist, und bei welchem mindestens zwei Sätze Schneckenkörper gemeinsam auf der Antriebswelle (18) montiert sind.

## Revendications

1. Tête à diviser (10, 60) prévue pour la division angulaire d'une table circulaire (24) comprenant une roue à vis sans fin (12) montée sur un arbre de roue à vis sans fin (14) sur lequel est fixée une table circulaire, et un engrenage à vis sans fin multiples (22, 62) engrené avec ladite roue à vis sans fin (12),
**caractérisée en ce que**,
ledit engrenage à vis sans fin (22, 62) est divisé en :
un corps de vis sans fin (16, 64) creux engrené avec ladite roue à vis sans fin (12) et possédant des dents présentant des pas différents sur les côtés opposés de la face des dents de façon à ce que l'épaisseur des dents augmente progressivement dans une direction de l'axe de rotation dudit engrenage ;
un arbre d'entraînement (18) inséré dans une partie creuse (46) dudit corps de vis sans fin (16, 64) ; et
une pièce d'assemblage démontable (20, 68) présentant une partie annulaire qui est coaxiale avec ledit arbre d'entraînement et qui se déplace de manière radiale pour pousser ledit corps de vis sans fin et ledit arbre d'entraînement afin de les coupler en les engageant par frottement, pour permettre d'ajuster le jeu entre l'engrenage à vis sans fin (22, 62) et la roue à vis sans fin (12).

2. Tête à diviser selon la revendication 1, dans laquelle ladite pièce d'assemblage (20) comprend un cylindre (50) qui forme ladite partie annulaire, le cylindre étant agencé entre ledit corps de vis sans fin (16) et ledit arbre d'entraînement (18), dont l'intérieur présente un réservoir de fluide (58), et pouvant se dilater avec sa périphérie extérieure et sa périphérie intérieure déplacées vers l'extérieur et l'intérieur dans la direction radiale par la pression du fluide contenu dans le réservoir ; une bride (52) intégrée à la suite d'une extrémité dudit cylindre et présentant un trou de vis (54) relié audit réservoir ; et un élément de vis (56) qui doit être vissé dans ledit trou de vis ; et
dans laquelle ledit corps de vis sans fin (16) présente un orifice de logement (48) pour recevoir ledit cylindre (50), l'orifice de logement présentant un diamètre plus large que celui dudit arbre d'entraînement (18).

3. Tête à diviser selon la revendication 1, **caractérisée en ce que** ledit corps de vis sans fin (64) présente à une extrémité un manchon déformable élastiquement (66), dans laquelle ladite pièce d'assemblage (68) présente une première bague (70) montée sur l'extérieur dudit manchon, une seconde bague (72) montée sur la périphérie extérieure de ladite première bague du côté des dents de l'engrenage à vis sans fin, une troisième bague (74) montée sur la périphérie extérieure de ladite première bague du côté opposé aux dents de l'engrenage à vis sans fin, et une pluralité d'éléments de vis (76) vissés dans ladite seconde bague, pénétrant ladite troisième bague, et dans laquelle lesdites première, seconde et troisième bagues déplacent ledit manchon dans sa direction radiale en fonction de la profondeur du vissage dudit élément de vis dans ladite seconde bague.

4. Tête à diviser selon la revendication 3 , dans laquelle ladite première bague (70) possède une périphérie extérieure présentant une section en forme de montagne grâce à deux faces coniques tronquées (78, 80), dans laquelle ladite seconde bague (72) possède une périphérie intérieure présentant une forme conique tronquée correspondant à une (78) desdites faces coniques tronquées, la périphérie intérieure de ladite seconde bague étant montée sur l'une (78) desdites faces coniques tronquées, et dans laquelle ladite troisième bague possède une périphérie intérieure présentant une forme conique tronquée correspondant à l'autre (80) desdites faces coniques tronquées de ladite première bague, la périphérie intérieure de la troisième bague étant montée sur l'autre (80) desdites faces coniques tronquées.

5. Tête à diviser selon les revendications 1, 2, 3 ou 4, dans laquelle ladite tête divisée est une tête divisée à plusieurs arbres comprenant de multiples jeux desdits corps de vis sans fin (16, 64) et desdites pièces d'assemblage (20, 68), et dans laquelle au moins deux jeux desdits corps de vis sans fin sont assemblés sur ledit arbre d'entraînement (18) en commun.
